# EUROPÄISCHE PATENTANMELDUNG

(11) **EP 2 362 029 A2**
(43) Veröffentlichungstag der Anmeldung: **31.08.2011**
(21) Anmeldenummer: 11001429.7
(22) Anmeldetag: 22.02.2011
(51) Int. Cl.: E03F 5/02, E02D 29/12, F16L 55/165

(54) **Verfahren zum Sanieren eines Schachtbauwerks**

(30) Priorität: 22.02.2010 DE 202010002628 U
(71) Anmelder: PT-POLY-TEC GmbH Vertrieb und Herstellung von Dichtungssystemen, 65629 Niederneisen (DE)
(72) Erfinder: Mehl, Helmut, 35781 Weilburg (DE)
(74) Vertreter: Bill, Burkart Hartmut

(57) **Zusammenfassung**

Die Erfindung betrifft ein Verfahren zur Sanierung eines Schachtbauwerks im Bereich von erdverlegten Kanälen bzw. Rohrleitungen, im Bereich von Abscheideanlagen und im Bereich von Kläranlagen. Zur Wiederherstellung der Dichtigkeit und Statik wird die Innenwand des Schachtbauwerks mit Abdichtfolie zur Abdichtung ausgekleidet und anschließend ein Stützgestell vom Innern des Schachtbauwerkes aus an die Abdichtfolie in Anlage gebracht und fixiert.

## Beschreibung

Die Erfindung betrifft ein Schachtbauwerk-Sanierungssystem zur Sanierung von
Schachtbauwerken im Bereich von erdverlegten Kanälen bzw. Rohrleitungen, im Bereich von Abscheideanlagen und im Bereich von Kläranlagen.

Schachtbauwerke werden im Bereich von Abscheideanlagen eingesetzt, um Wasser von Verunreinigungen zu reinigen, bevor dieses in das reguläre Kanalnetz eingeleitet wird. Im Bereich von erdverlegten Kanälen bzw. Rohrleitungen dienen Schachtbauwerke insbesondere zu deren Überprüfung, Unterhaltung und Reinigung und unterbrechen erdverlegte Kanalnetze bzw. Rohleitungsnetze für Schmutz-, Misch- oder Regenwasser. Im Bereich von Kläranlagen wird schließlich das über das Kanalnetz gesammelte Wasser, insbesondere Abwasser, gereinigt.

Gattungsbildende Schachtbauwerke sind in der Regel Bestandteil der kommunalen Abwasserversorgung und überwiegend aus Beton, Stahlbeton, Mauerwerk, Faserzement oder Polymerbeton aufgebaut, werden jedoch in zunehmendem Maß auch aus Kunststoff aufgebaut. Solche Schachtbauwerke werden ferner in der Regel aus einzelnen monolithischen Fertigbauteilen zusammengesetzt, welche überwiegend Ringe, Konen und Schachtböden sind. Zwischen den einzelnen Fertigbauteilen sind Kontaktfugen ausgebildet, die mit Mörtel und/oder geeigneten Dichtungen abgedichtet werden, um beispielsweise das Eindringen von Wasser oder auch das Abgeben von Wasser an die äußere Umgebung zu verhindern. Der Aufbau solcher Schachtbauwerkteile ist im Bereich von erdverlegten Kanälen bzw. Rohrleitungen z.B. in der Norm DIN 4034 definiert und die Dichtungen in der EN 1917. In Deutschland werden hauptsächlich vorgefertigte Schächte aus Beton oder Stahlbeton verbaut, wobei seit einigen Jahren auch andere Werkstoffe wie Steinzeug, Faserzement, Kunststoffe oder Werkstoffkombinationen verstärkt zur Anwendung kommen.

Alle diese Schachtbauwerke neigen dazu, im Laufe der Betriebszeiten undicht zu werden. Die Undichtigkeiten führen zum Eintreten von Fremdwasser oder Austreten von Abwasser. Zudem kann die Bettung um den Schacht in Mitleidenschaft gezogen werden, sodass es zu Gefährdungen für den Verkehr durch Absenken der Schächte kommen kann.

Eine Aufgabe der Erfindung ist es daher, einen neuen Weg zur Sanierung der Schachtbauwerke bereitzustellen, dass diese wieder eine zuverlässige Abdichtung und Statik aufweisen.

Gelöst wird diese Aufgabe gemäß der Erfindung mit einem Schachtbauwerk-Sanierungssystem nach Anspruch 1. Zweckmäßige Ausführungen und/oder Weiterbildungen sind Gegenstand der Unteransprüche.

Demgemäß sieht die Erfindung die Sanierung eines gattungsbildenden Schachtbauwerkes mittels einer in das Schachtbauwerk eingebrachten Abdichtfolie, insbesondere einer elastomeren Abdichtfolie, und einem anschließend in das Schachtbauwerk eingebrachten und an der Abdichtfolie in Anlage gebrachten und fixierten Stützgestell vor, wobei die Abdichtfolie die Innenwand des Schachtbauwerkes auskleidet und eine Abdichtung des Schachtbauwerkes bewirkt und das Stützgestell die Statik des Schachtbauwerkes einschließlich der Abdichtfolie bereitstellt.

Die Erfindung wird nachfolgend anhand von
Ausführungsbeispielen und Bezugnahme auf die beigefügten Zeichnungen näher beschrieben.

In den Zeichnungen zeigen:
Fig. 1 eine stark vereinfachte Skizze eines Längsschnittes durch ein beispielhaftes, zu sanierendes Schachtbauwerk mit bereits eingebrachten Dichtprofilen und vor Einbringen einer Abdichtfolie,
Fig. 2 eine stark vereinfachte Skizze des Längsschnittes des Schachtbauwerkes nach Fig. 1, jedoch mit eingebrachter Abdichtfolie, welche die Innenwand des Schachtbauwerkes auskleidet,
Fig. 3 eine stark vereinfachte Skizze des Längsschnittes des Schachtbauwerkes nach Fig. 2, jedoch mit eingebrachtem Stützgestell, und
Fig. 4 eine stark vereinfachte Skizze einer Schnittansicht eines ersten Dichtprofils gemäß in den Fig. 1 bis 3 eingebrachten Dichtprofilen, und eines zweiten Dichtprofils, welches ergänzend oder alternativ zu den ersten Dichtprofilen einsetzbar ist.

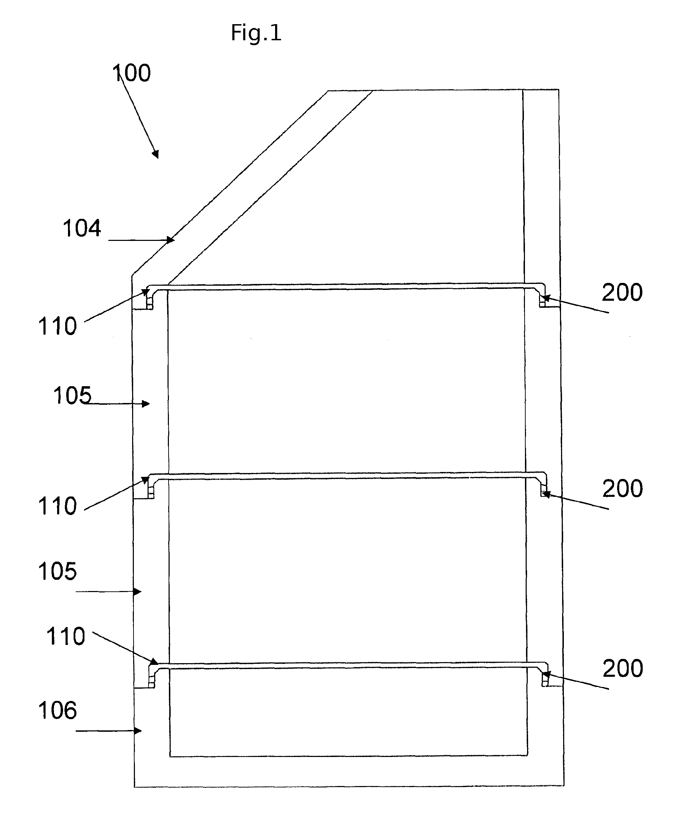

Nachfolgend wird auf die beigefügten Zeichnungen Bezug genommen, wobei die Fign. 1 bis 3. ein Beispiel eines gattungsbildenden Schachtbauwerkes 100 in skizzenhaftem Längsschnitt zeigen. Ein solches Schachtbauwerk 100 findet Einsatz im Bereich von erdverlegten Kanälen bzw. Rohrleitungen, im Bereich von Abscheideanlagen und im Bereich von Kläranlagen, wobei aus Gründen der

Übersichtlichkeit ein- oder abgehende Rohrleitungen oder Kanäle zur Führung von Wasser, insbesondere von Abwasser nicht dargestellt sind. Das Schachtbauwerk ist in der Praxis überwiegend aus Beton, Stahlbeton, Mauerwerk, Faserzement, Polymerbeton oder Kunststoff aufgebaut und ist im vorliegenden Ausführungsbeispiel aus einzelnen monolithischen Fertigbauteilen 104, 105 und 106 zusammengesetzt, welche Ringe 105, einen Konus 104 und einen Schachtboden 106 bilden. Auf der dem Schachtboden gegenüberliegenden oberen Seite besitzt das Schachtbauwerk einen abnehmbaren oder zu öffnenden Deckel, der gleichermaßen aus Gründen der Übersichtlichkeit nicht dargestellt ist. Alternativ kann das Schachtbauwerk auch einfach nach oben hin offen sein, ohne dass ein Deckel vorgesehen ist.

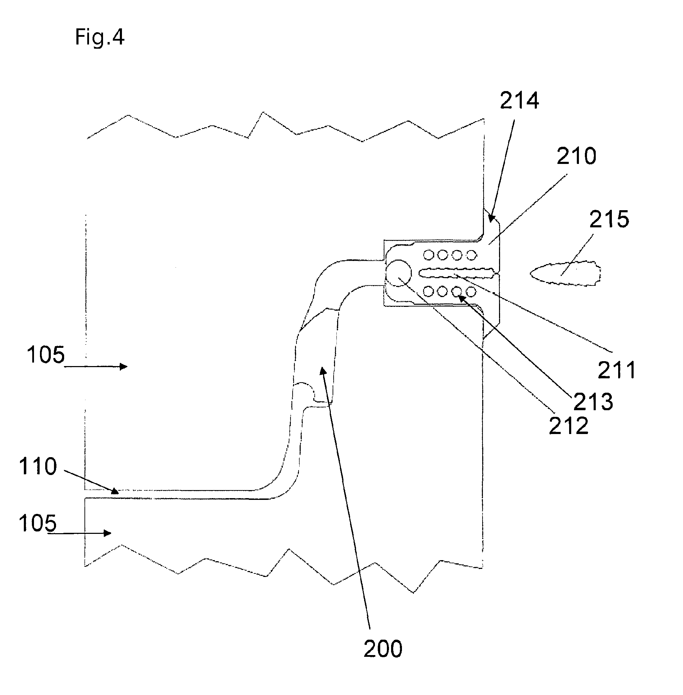

Ein derartiges, zu sanierendes Schachtbauwerk 100 wird zur Sanierung zweckmäßiger Weise zunächst im Wesentlich komplett, d.h. so gut es geht, gesäubert und von allen inneren Bauteilen, wie Steigeisen oder Leitern befreit. Im nächsten Arbeitsgang werden/sind zweckmäßig zunächst die Fugen 110 zwischen den einzelnen Fertigbauteilen 104, 105 106 saniert bzw. zu sanieren. Dies kann z.B. durch das Einbringen von Mörtel (nicht dargestellt) und/oder geeigneten Dichtprofilen geschehen, wie dies z.B. bei den Fig. 1 bis 3 durch in die Fugen 110 eingebrachte Dichtprofile 200 gezeigt ist. Wenn Dichtprofile verwendet werden, ist üblicherweise ein vorheriges Auffräsen der Fugen nötig. Die Dichtprofile 200 können aus elastomeren Kompressionsprofilen aufgebaut sein oder aus quellfähigen Dichtungen oder aus einer Kombination von beiden. Auf bevorzugte Dichtprofile wird unter Bezugnahme auf Fig. 4 detaillierter eingegangen.

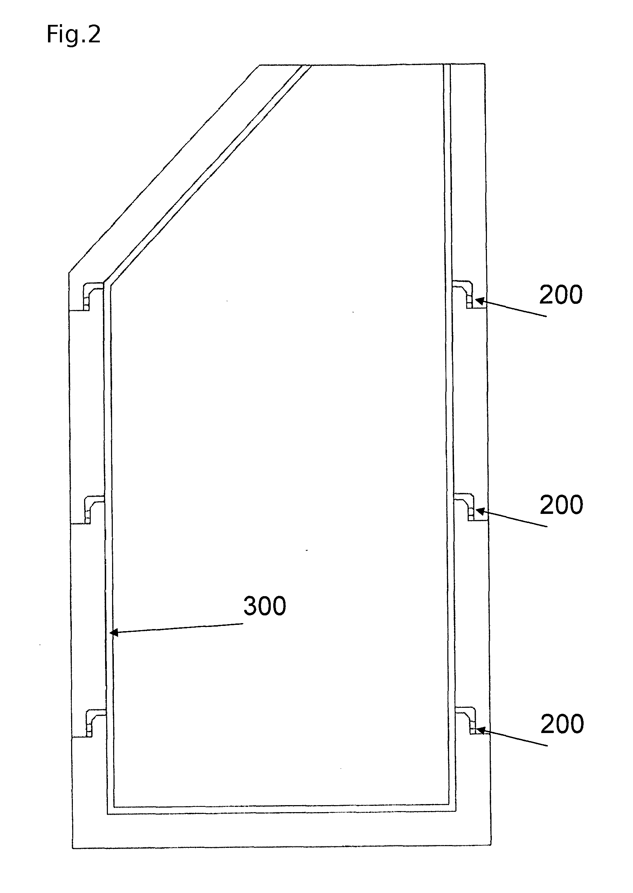

Ist somit vorgesehen, bei einem zu sanierenden Schachtbauwerk 100 auch die Fugen zu sanieren, z.B. gemäß stark vereinfachter Skizze nach Fig. 1, durch in den Fugen 110 eingebrachten Dichtprofilen 200, wird dies zunächst durchgeführt und erst anschließend in einem nächsten Arbeitsgang eine Abdichtfolie 300 in das Schachtbauwerk eingebracht bzw. ist diese einzubringen. Die Abdichtfolie 300, wie bei Fig. 2 zu sehen, kleidet nach erfolgter Montage die Innenwand des Schachtbauwerkes zur Abdichtung aus.

Zwar bedarf es zur abdichtenden Auskleidung der Innenwand des Schachtbauwerks durch die Abdichtfolie 300 nicht zwingend eine vorhergehende Sanierung zunächst der Fugen 110, jedoch schützt eine solche Sanierung die montierte Abdichtfolie 300 zusätzlich vor von außen eindringenden Medien und reduziert folglich zusätzlich die Gefahr einer "Blasenbildung" an der Abdichtfolie durch ansonsten über die Fugen druckausübende Medien. Auch verhindern zuvor sanierte Fugen, dass im Falle einer Beschädigung der montierten und also die Innenwand des Schachtbauwerkes auskleidenden Abdichtfolie im Schachbauwerk enthaltene Medien, d.h. insbesondere Wasser, einfach in die äußere Umgebung dringen können.

Die Abdichtfolie 300 kann zur Montage und Auskleidung der Innenwand in mehreren einzelnen Folienbahnen bzw. - streifen, in mehreren Arbeitsgängen in das Schachbauwerk eingebracht sein oder, wie bei Fig. 2 stark vereinfacht skizziert, bereits im Vorwege zu einem Sack vorkonfektioniert sein und dann im Ganzen in einem Arbeitsgang in das Schachtbauwerk eingebracht sein. Die Montage der Abdichtfolie300 beinhaltet die Verbindung der Abdichtfolie mit der Innenwand und erfolgt bevorzugt mittels einer Klebeverbindung mit der Innenwand. Dazu kann die Abdichtfolie z.B. mit einer Klebeschicht aus Bitumen versehen sein, wobei die bituminöse Klebeschicht bevorzugt einseitig, also lediglich an der zur Innenwand gerichteten Folienseite aufgebracht ist. Aber auch zur Auskleidung angewandte Verklebungen mit anderen Klebern, wie z.B. PU Klebstoffen oder Klebstoffen auf Epoxidharzbasis sind möglich. Zusätzlich kann die Abdichtfolie 300 zumindest an der zur Innenwand des Schachtbauwerkes gerichteten Oberfläche vorbehandelt, insbesondere mit einer rauen, verklebefreundlichen Oberfläche ausgestattet sein. Nach dem die Abdichtfolie 300 basierend auf mehreren einzelnen Folienbahnen oder basierend auf einem vorkonfektionierten Sack in den Schacht eingebracht worden, muss diese gegebenenfalls noch ausgerichtet und faltenfrei angelegt werden. Folglich ist eine eingesetzte Klebeschicht bzw. ein eingesetzter Klebstoff zweckmäßig, der zunächst weich und elastisch ist und die Positionierung der Bahn zulässt. Nach Ausrichtung wird als nächstes die Verklebung aktiviert bzw. ist diese zu aktivieren, indem der Abbindeprozess der Klebeschicht bzw. des eingesetzten Klebstoffs durch Wärme gestartet wird bzw. zu starten ist. Dazu ist der Einsatz von warmen Wasser oder Heißluft möglich.

Besteht die Abdichtfolie aus elastomeren Werkstoff, vereinfacht dies zusätzlich die Handhabung während der Auskleidung, welche, wie vorstehend erwähnt, möglichst faltenfrei erfolgen sollte, um auch hierdurch einer ansonsten eventuellen späteren Blasenbildung im Vorfeld weitestgehend bereits entgegen zu wirken. Zur zusätzlichen Unterstützung der faltenfreien Auskleidung der Innenwand mit der Abdichtfolie 300 sieht die Erfindung ferner vor, dass die Mantelfläche der Abdichtfolie vor der Auskleidung kleiner ist, als die Fläche der auszukleidenden Innenwand des Schachtbauwerkes und die Abdichtfolie während der Auskleidung gedehnt wird bzw. zu dehnen ist, also z.B. durch vorerwähntes warmes Wasser oder Heißluft.

Für die Praxis haben sich für die Abdichtfolie 300 elastomere Werkstoffe wie EPDM (Ethylen-Propylen-DienKautschuk), SBR (Styrol-Butadien-Kautschuk), NR (Naturkautschuk), BR (Butadien-Kautschuk) und/oder NBR (Nitril-Butadien-Kautschuk), d.h. einschließlich Verschnitte der genannten Kautschuke, als besonders zweckmäßig gezeigt, wobei auch andere Kunststoffe zur Herstellung der Abdichtfolie 300 einsetzbar sind. Ferner hat sich eine Härte für die Abdichtfolie 300 von vorzugsweise 50-70° Shore A und/oder eine Dicke für die Abdichtfolie 300 von vorzugsweise 0,8-1,2mm aufweist als besonders günstig, insbesondere für die Haltbarkeit und Widerstandfähigkeit der Abdichtfolie, gezeigt. Um Zuordnung zu dem möglichen Einsatzzweck der Abdichtfolie, insbesondere auch basierend auf dem jeweiligen Werkstoff, herzustellen hat sich eine auf der Abdichtfolie aufgebrachte Identifizierungskennung, einschließlich unterschiedlicher Farben, als zweckdienlich erwiesen. So können hierdurch z.B. auf einfachste Weise Abdichtfolien, die für Schachtbauwerke mit Trinkwasser gegenüber Abdichtfolien, die für Schachtbauwerke mit Abwasser oder auch mit chemisch verunreinigtem Abwasser zu verwenden sind, unterschieden werden.

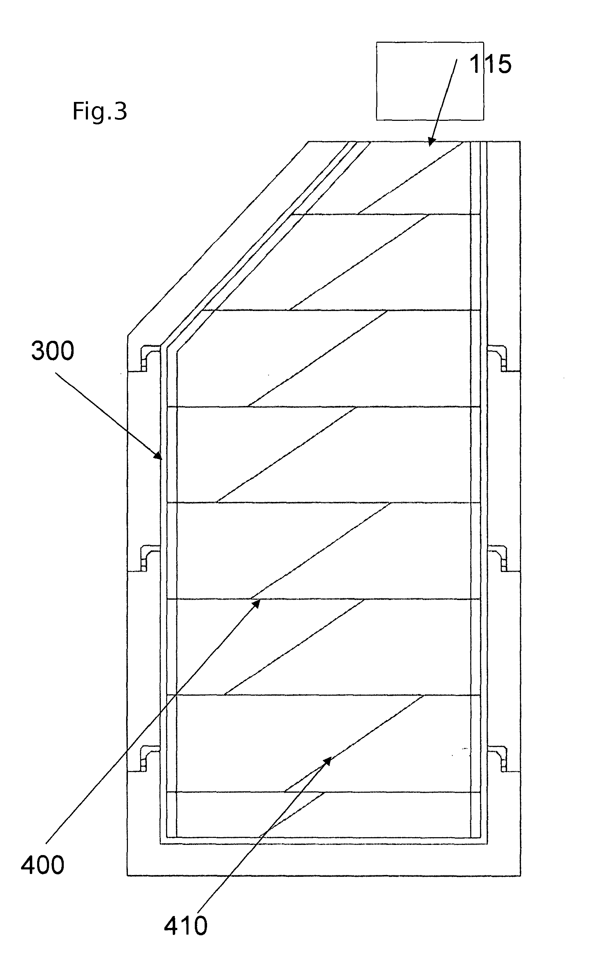

Nach Montage der Abdichtfolie 300 im Innern des Schachtbauwerkes 100 mit entsprechender Auskleidung der Innenwand des Schachtbauwerkes 100 zur Abdichtung, wird bzw. ist, um die Abdichtfolie 300 zusätzlich gegen mögliches drückendes Wasser zu stützen, im nächsten Schritt ein Stützgestell 400 im Innern des Schachtbauwerkes 100 eingebracht/einzubringen und in Anlage an die Abdichtfolie gebracht/zu bringen, welches im fixierten Zustand, wie bei Fig. 3 skizziert, bevorzugt einen im Wesentlichen ring-oder gitterartigen Aufbau besitzt. Dieses Stützgestell 400 ist zweckmäßig aus Kunststoff oder Metall und besitzt in der Regel mehrere Segmente aus Kunststoff oder Metall. Die Elemente sind konstruktiv so gestaltet, dass diese über die Schachtbauwerköffnung 115 in das Schachtbauwerk eingebracht werden können. Dazu können die Elemente, einschließlich mehrerer Einzel-Ringe bzw. Einzel-Gitter, z.B. einzeln in das Innere des Schachtbauwerkes eingebracht und dort modulartig zusammengesetzt sein. Alternativ können die Elemente derart vorkonfektioniert und bereits vor Montage miteinander verbunden sein, dass im noch nicht fixierten Zustand des Stützgestells 400 verformbar ist, z.B. durch geeignete Faltfalze 410.Das Stützgestell 400 kann somit im Durchmesser verkleinerbar sein, um zunächst in die Schachtbauwerksöffnung 115 eingebracht zu werden und kann im Innern des Schachtbauwerkes wieder aufgespreizt werden, um in Anlage an die Abdichtfolie gebracht und dort fixiert zu werden. Sind alle Elemente in den Schacht eingebaut und fixiert, kann die Konstruktion des Stützgestells 400 statische Kräfte übernehmen. Je nach Zerstörungsgrad des zu sanierenden Schachtes können verschieden steife Elemente eingebracht werden. Diese können demnach nur zur Abstützung von Wasserdruck, bis hin zur vollständigen Wiederherstellung, oder sogar Erhöhung der Statik des sanierten Schachtbauwerkes, dimensioniert sein.

Ist das Stützgestell erfindungsgemäß als eine Art Gitter in den Schacht eingebracht, hat dieses dann zweckmäßig einen Maschenabstand bei dem eine ausreichende Stützung der Abdichtfolie noch gewährleistet ist.

Wie vorstehend bereits beschrieben, ist es je nach Einsatz des erfindungsgemäßen Schachtbauwerk-Sanierungssystem zweckmäßig, wenn dieses zusätzlich Dichtprofile 200 und/oder 210, 215 umfasst, die vor dem Einbringen der Abdichtfolie 300, zur unterstützenden Abdichtung der Fugen 110 des Schachtbauwerkes im Vorfeld in diese eingebracht sind.

Ein solches Dichtprofil besitzt somit zweckmäßig ebenfalls elastomeres Material, welches ferner bevorzugt zumindest teilweise quellfähig ist, insbesondere durch Wassereinwirkung oder welches durch Stromzuführung elektrisch und in Folge also durch Wärme zur Quellung aktivierbar ist. Für ein durch Wärme zur Quellung aktivierbares Material kann z.B. ein thermoplastisches oder duroplastisches Material eingesetzt werden.

Das im Ausführungsbeispiel gemäß Fig. 3 in eine Fuge 110 eingesetzte Dichtprofil 200 ist hierbei einteilig wohingegen das alternativ oder ergänzend eingesetzte Dichtprofil 210, 215 mehrteilig ist und neben einem Dichtelement 210 zumindest ein Spannmittel 215, zweckmäßig in Form eines Keils besitzt. Das Dichtprofil 200 und auch das Dichtelement 210 ist bevorzugt in einer Form hergestellt, so dass es in einem Stück in eine Fuge 110 einsetzbar ist und Stoß- oder Grenzflächen innerhalb des Dichtprofils 200 und des Dichtelements 210 vermieden sind. Im Falle eines im Querschnitt ringförmigen Schachtbauwerkes mit entsprechend ringförmig umlaufenden Fugen 110 zwischen zwei Schachtbauwerkselementen 105 besitzt das Dichtprofil 200 oder auch das Dichtelement 215 folglich bevorzugt einen ringförmigen Form, deren Dicke und Querschnitt zweckmäßig der jeweiligen Fugenbreite angepasst ist.

Die Dicke des Dichtprofils 200 ist gemäß Fig. 3 derart angepasst, dass diese etwas größer ist, als die Breite der Fuge 110 an der Position, an welcher das Dichtprofil eingebracht ist, so dass das Dichtprofil 200 im eingebrachten Zustand gestaucht ist und folglich zu beiden Schachtbauwerkselementen 105 hin vollständig abdichtet. Besitzt das Dichtprofil 200 quellfähiges elastomeres Material wird bzw. ist die Abdichtwirkung bei Quellung des Dichtprofils 200 noch zusätzlich erhöht.

Die Dicke des Dichtelements 210 ist darüber hinaus mittels Eintreiben des Spannmittels 215 noch während der Montage variierbar.

Im Einzelnen besitzt das im Ausführungsbeispiel gemäß Fig. 3 unter der Annahme eines im Querschnitt im Wesentlichen ringförmigen Schachtbauwerks zweckmäßig ein mechanisch verspannbares, gummielastisches und ringförmiges Dichtungselement 210 und zumindest ein Spannmittel 215, wobei an einer Stirnseite des Dichtungselements 210 für jedes Spannmittel 215 ein keilförmiger Spannschlitz 211 ausgebildet ist, in welchen das Spannmittel zur Volumenvergrößerung des Dichtungselementes eingetrieben bzw. eingeschlagen werden kann. Wie anhand der Figuren zu sehen, kann das Dichtelement 210 vom Innern des Schachtbauwerkes aus in die Fuge 110 eingebracht sein, wobei in diesem Fall die Abdichtfolie bei Auskleidung der Innenwand des Schachtbauwerkes das Dichtelement 210 überdeckt.

Gemäß Fig. 3 besitzt das Spannmittel 215 zweckmäßig eine gezahnte oder geriffelte Oberfläche und der Spannschlitz eine gezahnte oder geriffelte Innenfläche, welche beim Eintreiben des Spannmittels 215 in den Spannschlitz 211 zusätzlich eine Verzahnung oder Verrastung und somit einen nochmals verbesserten Sitz des eingetriebenen Spannmittels 215 im Spannschlitz 211 bewirken. Auch ist zum vereinfachten Eintreiben des Spannmittels bevorzugt die Innenfläche des Spannschlitzes vorgemiert.

Als besonders zweckmäßig hat sich für das Dichtelement 210 ein EPDM-Material erwiesen. Das Spannmittel ist bevorzugt aus einem Hartgummi hergestellt. Ferner at sich für das Dichtelement 210 eine Härte von etwa 60 Shore A und für das Spannmittel 215 eine Härte von etwa 90 Shore A als zweckmäßig gezeigt. Es sei jedoch darauf hingewiesen, dass je nach Einsatz auch andere elastomere Materialen und/oder andere Materialhärten verwendbar sein können.

Ferner sind an dem in Fig. 3 skizzierten Dichtelement 210 an dessen äußeren und/oder inneren Bereichen zusätzliche, aus einem quellfähigen Material bestehende Dichtungskomponenten 212 bzw. 213 vorgesehen. Die Dichtungskomponenten 212 oder 213 können hierbei je nach Fugenform und/oder Einsatzgebiet aus quellfähigem Material sein, welches durch Wassereinwirkung aufquillt oder auch elektrisch und somit durch Wärme individuell aktivierbar ist. Im letzteren Fall sind entsprechend Leitungen im Dichtprofil integriert und nach außen geführt, über welche Strom einspeißbar ist.

An dem skizzierten Dichtungselement 210 ist zusätzlich an der Seite des Spannschlitzes 211 eine Schutzhülse 214 zum Einführen des Spannmittels und zum Schutz der Schachtbauwerkswand integral angeformt, welche im Ausführungsbeispiel gleichzeitig einen Anschlagbund des Dichtungselementes 210 ausbildet.

Es sei jedoch darauf hingewiesen, dass eine Schutzhülse und ein Anschlagbund auch durch unterschiedliche Anformungen gebildet sein können und weder eine Schutzhülse noch ein Anschlagbund in jedem Fall vorgesehen sein müssen.

Auch ist darauf hinzuweisen, dass grundsätzlich auch andere Dichtprofile als die dargestellten je nach Fugenform und/oder Einsatzgebiet des erfindungsgemäßen Schachtbauwerk-Sanierungssystem zur Anwendung kommen können.

## Patentansprüche

1. Schachtbauwerk-Sanierungssystem zur Sanierung von Schachtbauwerken, insbesondere von Schachtbauwerken überwiegend aus Beton, zur Wiederherstellung der Dichtigkeit und Statik, **dadurch gekennzeichnet, dass** die Innenwand des Schachtbauwerks mit Abdichtfolie zur Abdichtung ausgekleidet wird bzw. auszukleiden ist, und anschließend ein Stützgestell vom Innern des Schachtbauwerkes aus an die Abdichtfolie in Anlage gebracht und fixiert wird bzw. zu bringen und zu fixieren ist.

2. System nach Anspruch 1, **dadurch gekennzeichnet, dass** die Abdichtfolie vor Auskleidung zu einem "Sack" vorkonfektioniert ist und im Ganzen in das Schachtbauwerk zur Auskleidung der Innenwand eingelassen wird bzw. einzulassen ist oder **dadurch gekennzeichnet, dass** die Abdichtfolie in einzelnen Folienbahnen bzw. -streifen in das Schachtbauwerk zur Auskleidung der Innenwand eingebracht wird bzw. einzubringen ist.

3. System nach einem der vorstehenden Ansprüche, **dadurch gekennzeichnet**, das die Abdichtfolie zur Auskleidung der Innenwand mit dieser verklebt wird bzw. zu verkleben ist, insbesondere über Heißluft.

4. System nach vorstehendem Anspruch, **dadurch gekennzeichnet, dass** die Abdichtfolie einseitig mit einer bituminösen Klebeschicht versehen ist und/oder mit einem alternativen Kleber zur Auskleidung eingeklebt wird bzw. einzukleben ist, vorzugsweise mittels Klebstoff auf Epoxidharzbasis oder PU Kleber.

5. System nach einem der vorstehenden Ansprüche, **dadurch gekennzeichnet, dass** die Abdichtfolie aus elastomeren Werkstoff besteht.

6. System nach vorstehendem Anspruch, **dadurch gekennzeichnet, dass** die Abdichtfolie aus EPDM, SBR, NR, BR und/oder NBR oder aus einem Kunststoff hergestellt ist.

7. System nach einem der vorstehenden Ansprüche, **dadurch gekennzeichnet, dass** die Abdichtfolie eine Härte von vorzugsweise 50-70° Shore A aufweist
und/oder,
dass die Abdichtfolie eine Dicke von vorzugsweise 0,8-1,2mm aufweist.

8. System nach einem der vorstehenden Ansprüche, **dadurch**
**gekennzeichnet, dass** die Mantelfläche der Abdichtfolie vor Auskleidung kleiner ist, als die Fläche der auszukleidenden Innenwand des Schachtbauwerkes ist und die Abdichtfolie während der Auskleidung gedehnt wird bzw. zu dehnen ist
und/oder,
dass die Abdichtfolie eine Identifizierungskennung, einschließlich unterschiedlichen Farben, aufweist, um eine Zuordnung zu dem möglichen Einsatzzweck herzustellen
und/oder,
dass die zur Innenwand des Schachtbauwerkes gerichtete Oberfläche der Abdichtfolie vorbehandelt ist, insbesondere zur besseren Verklebung aufgeraut ist.

9. System nach einem der vorstehenden Ansprüche, **dadurch**
**gekennzeichnet, dass** das Stützgestell, welches vom Innern des Schachtbauwerkes aus an die Abdichtfolie in Anlage gebracht wird bzw. zu bringen ist, im fixierten Zustand einen ring- oder gitterartig Aufbau besitzt und Kunststoff oder Metall umfasst.

10. System nach vorstehendem Anspruch, **dadurch gekennzeichnet, dass** der ring- oder gitterartig Aufbau modulartig aus mehrere Einzel-Elementen, einschließlich mehreren Einzel-Ringen bzw. Einzel-Gittern zusammengesetzt ist.

11. System nach einem der vorstehenden Ansprüche, **dadurch gekennzeichnet, dass** das Stützgestell im noch nicht fixierten Zustand verformbar ist.

12. System nach einem der vorstehenden Ansprüche, **dadurch**
**gekennzeichnet, dass** vor dem Einbringen der Abdichtfolie, Fugen des Schachtbauwerkes mit Dichtprofilen abgedichtet werden.

13. System nach vorstehendem Anspruch, **dadurch**
**gekennzeichnet, dass** das Dichtprofil elastomeres Material besitzt, wobei das Material vorzugsweise zumindest teilweise quellfähig ist, insbesondere durch Wassereinwirkung.

14. System nach einem vorstehendem Ansprüche 12 bis 13,
**dadurch gekennzeichnet, dass** das Dichtprofil ein mechanisch verspannbares, gummielastisches Dichtelement, insbesondere ein ringförmiges Dichtungselement, besitzt und wenigstens ein Spannmittel, wobei an einer Stirnseite des Dichtungselements für das Spannmittel ein keilförmiger Spannschlitz ausgebildet ist, in welchen das Spannmittel zur Volumenvergrößerung des Dichtungselementes eingetrieben oder eingeschlagen werden kann bzw. einzutreiben oder einzuschlagen ist.

15. System nach einem vorstehendem Ansprüche 12 bis 14, **dadurch gekennzeichnet, dass** an den Außen- und/oder Innenflächen des Dichtungselementes zusätzliche, aus einem quellfähigen Material bestehende Dichtungskomponenten vorgesehen sind und/oder,
dass an das Dichtungselement auf der Seite des Spannschlitzes eine Schutzhülse zum Einführen des Spannmittels und zum Schutz der Schachtbauwerkswand integral angeformt ist
und/oder,
dass das Dichtungselement einen Anschlagbund aufweist und/oder,
dass die quellfähige Dichtungskomponente elektrisch, d.h. durch Wärme aktivierbar ist.
